(19) Europäisches Patentamt
European Patent Office
Office européen des brevets

(11) **EP 2 239 985 B1**

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(51) Int Cl.:
***H04W 24/02*** *(2009.01)*

(21) Anmeldenummer: **09157699.1**

(22) Anmeldetag: **09.04.2009**

(54) **Verfahren zur Neuzuordnung von Zellen zu Lokalisierungszonen in zellulären Mobilfunknetzen auf Basis von Handover-Statistiken**

Method for reallocating cells to location areas in cellular mobile radio networks on the basis of handover statistics

Procédé de réaffectation de cellules à des zones de localisation dans des réseaux radio mobiles cellulaires à base de statistiques de transfert

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**13.10.2010 Patentblatt 2010/41**

(73) Patentinhaber: **Deutsche Telekom AG**
**53113 Bonn (DE)**

(72) Erfinder: **Wieser, Wilfried**
**64319 Pfungstadt (DE)**

(56) Entgegenhaltungen:
**EP-A- 1 139 682      EP-A- 1 643 792**
**EP-B1- 1 238 555**

• **DEMESTICHAS P ET AL: "Computationally efficient algorithms for location area planning in future cellular systems" COMPUTER COMMUNICATIONS, ELSEVIER SCIENCE PUBLISHERS BV, AMSTERDAM, NL, Bd. 23, Nr. 13, 1. Juli 2000 (2000-07-01), Seiten 1263-1280, XP004200487 ISSN: 0140-3664**

EP 2 239 985 B1

## Beschreibung

Technisches Gebiet

Die vorliegende Erfindung betrifft ein Verfahren, ein System, ein Computerprogramm und ein digitales Speichermedium mit einem Computerprogramm zur Neuzuordnung von Zellen zu Lokalisierungszonen in zellulären Mobilfunknetzen auf Basis von Handover-Statistiken.

Hintergrund der Technik

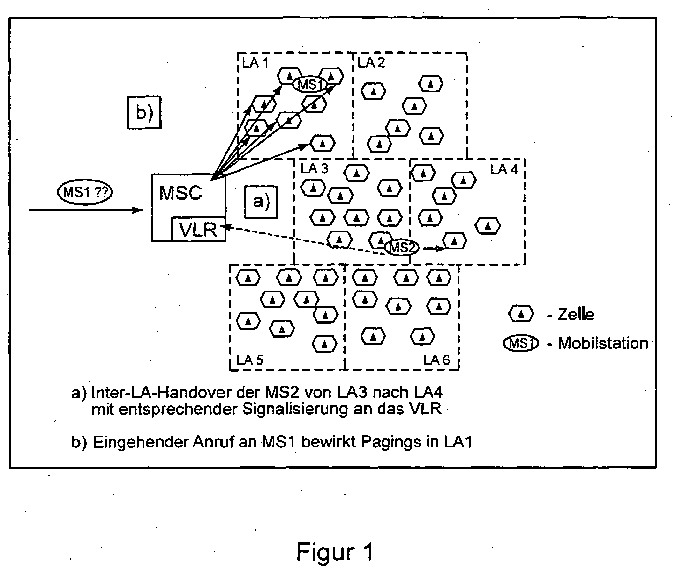

Das gesamte Versorgungsgebiet eines Mobilfunknetzes ist in eine Vielzahl von Zellen aufgeteilt, die jeweils ein relativ zur Gesamtfläche kleines Teilgebiet zu versorgen haben. Für den effizienten Aufbau einer Verbindung zu einer Mobilstation (MS) ist das schnelle Auffinden der Zelle, in der diese sich befindet, von entscheidender Bedeutung.
Hierzu werden räumlich zusammenhängende Gruppen von Zellen (ca. 50 bis 200 Zellen) zu einer Lokalisierungszone (Location Area - LA) zusammengefasst. Mehrere (ca. 5-10) benachbarte dieser LAs gehören zu in der Regel einem Versorgungsbereich eines Vennittlungsknotens des Mobilfunknetzes (Mobile Services Switching Center - MSC) und sind signaltechnisch mit dem dort befindlichen Visitor Location Register (VLR) verbunden, einer Datenbank, die für jede im MSC-Bereich befindliche MS deren aktuelle LA gespeichert hält, und die darüberhinaus das Home Location Register der jeweiligen MS über den MSC-Bereich informiert, in dem sich die MS aktuell aufhält.
Damit wird die Suche nach einer MS bei einem eingehenden Anruf auf die Anfrage (mittels Funkrundrufen, sog. Pagings) an die Basisstationen der Zellen dieser LA begrenzt, siehe auch Figur 1. Der Signalisierungsaufwand des skizzierten Lokalisierungskonzepts bestimmt sich

a) einerseits aus der Häufigkeit der durch die Bewegung der Mobilstationen hervorgerufenen Wechsel (Handover - HO) zu einer Zelle einer benachbarten LA (Inter-LA-Handover), denn nur dann muss das VLR aktualisiert werden;
b) andererseits aus dem Volumen der bei eingehenden Anrufen erforderlichen Pagings innerhalb der LAs.

Zur Verdeutlichung seien zwei Extremfälle betrachtet:
Würden alle Zellen eines MSC-Bereichs zu nur *einer* LA zusammengefasst, so wäre der Signahsierungsaufwand für die Aktualisierung des VLR sehr gering (im wesentlichen An- und Abmeldung der MS bei Eintritt bzw. Verlassen des MSC-Bereichs); der Paging-Aufwand ist demgegenüber umso höher, je mehr Zellen der MSC-Bereich umfasst.
Würde andererseits jeder Zelle eines MSC-Bereichs eine eigene LA zugeordnet, so wäre der Signalisierurzgsaufwand hoch, da mit jedem Zellenwechsel einer MS eine Aktualisierung der VLR erforderlich wäre; in diesem Fall wäre aber der Paging-Aufwand gering, da bei eingehendem Anruf die Zelle, in der sich die gerufene MS aufhält, bekannt ist.
Wegen der Knappheit der physikalischen Ressourcen, die einem Mobilfunknetz zur Verfügung stehen, ist es nötig, den Signalisierungsverkehr und die mit ihm verbundenen Kosten möglichst gering zu halten.
Ein hoher Stellenwert kommt daher dem sog. "Location Area Design" zu, also der Planungsaufgabe, die Zellen eines MSC-Bereichs in LAs so zusammenzufassen, dass ein möglichst geringer Signalisierungsaufwand entsteht.
In der Literatur wird diese Aufgabe durch mathematische Modelle beschrieben, und die daraus abgeleiteten Optimierungsprobleme durch mathematische Heuristiken gelöst (siehe z. B. Simon, V.; Imre, S., "Location Area Design Algorithms for Minimizing signalling costs in Mobile Networks", International Journal of Business Data Communications and Networking, Vol. 3, Issue 2, April 2007 und Demestichas P. et al., "Computationally efficient algorithms for location area planning infuture cellular systems", Computer Communications 23, 2000). Vom praktischen Standpunkt betrachtet, ist der in diesen Modellen durchgeführte Ansatz eines "Erstentwurfs" einer Konfiguration von LAs jedoch problematisch, denn die entsprechenden Lösungsalgorithmen erfordern Eingangsdaten wie z.B. Annahmen über die Ereignishäufigkeit von Zellenwechseln der MS, die empirisch vor dem Erstentwurf noch gar nicht belegt werden können. Wie realitätsnah solche Annahmen sind, ist allenfalls per Analogieschluss aus Erfahrungen mit bereits bestehenden Netzen abschätzbar. In der Praxis werden daher bei der Erstaufteilung der Zellen eines MSC-Bereichs in verschiedene LAs zusätzlich geographische und demographische Gesichtspunkte berücksichtigt (landschaftliche Bedingungen, Straßeninfrastruktur, erwartetes Verkehrsaufkommen, etc).
Dagegen finden sich in der veröffentlichten Literatur keine systematischen Lösungsansätzeim Sinne eines Verfahrens - bezüglich des für die betriebliche Planung gewichtigeren Problems, eine *bestehende* Konfiguration von LAs auf Basis vorliegender empirischer Daten zu verbessern, also durch die *Neuzuordnung von Zellen* zu einer anderen LA den oben beschriebenen Signalisierungsaufwand zu mindern.
Ein entsprechender Verbesserungsprozess findet zwar bei Netzbetreibern periodisch (z.B. jährlich oder halbjährlich) statt, jedoch konzentrieren sich die Verbesserungsmaßnahmen auf die Identifizierung und Bereinigung von besonders kritischen Signalisierungsengpässen. Eine alternative Vorgehensweise, nämlich möglichst viele Varianten von Neuzuordnungen auf ihr Verbesserungspotential hin zu überprüfen, ist manuell nur mit unvertretbar hohem Aufwand zu leisten und erfordert daher die Unterstützung durch ein anderes Verfahren.

In der Tat ist das Auffinden einer möglichst guten Neuzuordnung von Zellen ein hochkomplexes Problem. Dies liegt daran, dass in Bezug auf eine Signalisierungsminderung nicht nur die Neuzuordnung jeder einzelnen Zelle (zu einer anderen LA) individuell betrachtet werden darf, sondern für die jeweilig ausgewählte Gruppe neuzuzuordnender Zellen *in ihrer Gesamtheit* überprüft werden muss, ob eine Minderung des Signalisierungsverkehrs erreicht wird.

Um etwa die *optimale* Neuzuordnung zu bestimmen, müssten *alle* Neuzuordnungsvarianten durchlaufen werden. Hieraus wurden sich Kombinationen von der Größenordnung $2^N$ ergeben, wenn mit N die Anzahl der für einen LA-Wechsel zu überprüfenden Zellen bezeichnet wird. Für beispielsweise N = 50 Zellen bedeutet dies die Überprüfung von ca. 1,12 Billiarden Zellenwechsel-Kombinationen auf eine Reduktion des Signalisierungsverkehrs hin, wobei sich diese Anzahl mit jeder Hinzunahme einer weiteren Zelle verdoppelt.

Die EP-A-1 139 682 beschreibt ein Verfahren nach dem Oberbegriff von Anspruch 1, wobei das Optimierungsproblem dadurch vereinfacht wird, dass nur die Bereiche an den Grezen zwischen den Lokalisierungszonen auf Basis von Handover-Ereignissen optimiert werden.

Zusammenfassung der Erfindung

Die vorliegende Erfindung bezieht sich auf die verbesserte Unterstützung bei der Neuzuordnung von Zellen zu Lokalisierungszonen in zellulären Mobilfunknetzen.

Diese Aufgabe wird durch der Gegenstand der Ansprüche gelöst.

Die Erfindung betrifft ein Verfahren zur Neuzuordnung von Zellen einer ausgewählten Zellengruppe eines zellulären Mobilfunknetzen zu Lokalisierungszonen, die vorzugsweise einem Versorgungsbereich eines Vermittlungsknotens des Mobilfunknetzes entspricht. Die Zellen der ausgewählten Zellengruppe sind in mindestens zwei Lokalisierungszonen des Mobilfunknetzes aufgeteilt. Das Verfahren weist die folgenden Schritte auf:

A. Bestimmen und Speichern der Anzahl der Handover-Ereignisse, die in einem Beobachtungszeitraum zwischen je zwei Zellen der ausgewählten Zellengruppe stattfinden;
B. Auswerten der gespeicherten Anzahl der Handover-Ereignisse zur Bestimmung der Randzellen der ausgewählten Zellengruppe, bei denen mindestens ein Handover-Ereignis zwischen dieser Randzelle einer Lokalisierungszone und einer Zelle einer anderer Lokalisierungszone stattfand;
C. Neuzuordnen mindestens einer der bestimmten Randzellen zu einer ihr benachbarten Lokalisierungszone, wenn diese Neuzuordnung das Gesamtvolumen an Handovers zwischen Zellen verschiedener Lokalisierungszonen verringert.

Es wird bevorzugt die Anzahl der Handover-Ereignisse in einer Matrix zu speichern, wobei die Matrix vorzugsweise symmetrisiert wird.

Das Neuzuordnen mindestens einer der bestimmten Randzellen zu einer ihr benachbarten Lokalisierungszone, siehe Schritt C, weist eine Auswertung einer Randzelle c auf, wobei die Summe $HO\_ext(c)$ der Handovers zwischen der Randzelle c und solchen Zellen, die anderen Lokalisierungzonen zugeordnet sind, bestimmt wird. Es ist ferner vorgesehen, dass das Neuzuordrien eine Auswertung einer Randzelle c aufweist, wobei die Summe $HO\_int(c)$ der Handovers zwischen der Randzelle c und solchen Zellen c', die sowohl die Bedingung $HO\_ext(c')=0$ erfüllen als auch der Lokalisierungzone der Randzelle c zugeordnet sind, bestimmt wird. Hier weist das Neuzuordnen eine Auswertung einer Randzelle c, die $HO\_ext(c)>0$ erfüllt, auf, wobei die Summe $HO\_com(c)$ der Handovers zwischen der Randzelle c und solchen Zellen c', die sowohl die Bedingung $HO\_ext(c')>0$ erfüllen als auch der Lokalisierungzone der Randzelle c zugeordnet sind, bestimmt wird. Es ist auch vorgesehen, dass das Neuzuordnen eine Auswertung des Nachbarschaftsgrades $Nb(c)$ einer Randzelle c aufweist, wobei der Nachbarschaftsgrad $Nb(c)$ der Anzahl der benachbarten Lokalisierungszonen, mit denen die Randzelle c in dem Beobachtungszeitraum Handovers durchgeführt hat, entspricht.

Das Neuzuordnen mindestens einer der bestimmten Randzellen zu einer ihr benachbarten Lokalisierungszone, weist vorzugsweise eine Auswertung der Potentiale $Pot1(c) = HO\_int(c)-HO\_ext(c)-HO\_com(c)$ und $Pot2(c)=HO\_ext(c)-HO\_int(c)-HO\_com(c)$ einer Randzelle c auf, wobei eine Randzelle c vorzugsweise keiner neuen Lokalisierungszone zugeordnet wird, wenn diese Randzelle c die Bedingung $Pot1(c)>0$ erfüllt. Ferner wird vorzugsweise eine Randzelle c der ihr benachbarten Lokalisierungszone zugeordnet, wenn diese Randzelle c die Bedingungen $Pot2(c)>0$ und $Nb(c)=1$ erfüllt.

Es wird auch bevorzugt, dass eine Randzelle c in eine Gruppierungsmenge R1 aufgenommen wird, wenn diese Randzelle c die Bedingung $Nb(c) = 1$ erfüllt, aber die Bedingungen $Pot1(c)>0$ und $Pot2(c)>0$ nicht erfüllt, wobei die in die Gruppierungsmenge R1 aufgenommenen Randzellen vorzugsweise in disjunkte Gruppen gruppiert werden. Die Gruppierung der in die Gruppierungsmenge R1 aufgenommenen Randzellen in disjunkte Gruppen weist vorzugsweise die folgenden Schritte auf:

- Auffassen der Menge der Randzellen R1 als Knoten eines Graphen;
- Verbinden zweier der Knoten im Graphen, wenn die entsprechenden Randzellen verschiedenen Lokalisierungszonen zugeordnet sind und Handovers zwischen diesen Knoten vorhanden sind;

- Bestimmung der Zusammenhangskomponenten dieses Graphen;
- Gruppierung der Randzelle R1 in disjunkte Gruppen über die Identifikation einer Gruppe mit einer der Zusammenhangskomponenten.

Es wird ferner bevorzugt, dass die Anzahl der in disjunkte Gruppen gruppierten Randzellen auf eine maximale Gruppengröße G_max beschränkt wird, wobei vorzugsweise die in disjunkte Gruppen gruppierten Randzellen in absteigender Reihenfolge ihres Potentials Pot2(c) sortiert werden und die ersten G_max Randzellen der absteigenden Reihenfolge ausgewählt werden.

Es wird bevorzugt, dass in jeder der disjunkten Gruppen diejenige Kombination von Randzellen zur Neuzuordnung zu ihnen benachbarten Lokalisierungszonen bestimmt wird, die das Gesamtvolumen an Handovers zwischen Zellen verschiedener Lokalisierungszonen am stärksten verringert, wobei vorzugsweise die gefundenen Kombinationen je Gruppe zu einer Gesamtkombination von Randzellen zur Neuzuordnung zu ihnen benachbarten Lokalisierungszonen zusammengefasst wird.

Das Verfahren wird vorzugsweise als iteratives Verfahren durchgeführt, wobei die Schritte A, B und C in iterativen Schritten wiederholt werden. Die Iteration kann vorzugsweise abgebrochen werden, wenn im Schritt C keine Neuzuordnung bestimmt wird, die das Gesamtvolumen an Handovers zwischen Zellen verschiedener Lokalisierungszonen verringert, oder alternativ, wenn die Anzahl der Iterationsschritte einen vorbestimmten Grenzwert max_Iter erreicht.

Nach einem weiteren Aspekt der Erfindung wird ein Computerprogrammprodukt zum Durchführen des oben beschriebenen Verfahrens nach Anspruch 19, und nach einem anderen Aspekt der Erfindung wird ein digitales Speichermedium mit einem solchen Computerprogrammprodukt nach Anspruch 20 bereitgestellt.

Ferner wird nach einem weiteren Aspekt der Erfindung ein System nach Anspruch 18 zur Neuzuordnung von Zellen einer ausgewählten Zellengruppe eines zellulären Mobilfunknetzen zu Lokalisierungszonen bereitgestellt, wobei die Zellen der ausgewählten Zellengruppe in mindestens zwei Lokalisierungszonen des Mobilfunknetzes aufgeteilt sind, mit:

1. einer Datenerfassungsvorrichtung zum Bestimmen und Speichern der Anzahl der Handover-Ereignisse, die in einem Beobachtungszeitraum zwischen je zwei Zellen der ausgewählten Zellengruppe stattfinden;

2. einer Auswertevorrichtung zum Auswerten der gespeicherten Anzahl der Handover-Ereignisse zur Bestimmung der Randzellen der ausgewählten Zellengruppe, bei denen mindestens ein Handover-Ereignis zwischen dieser Randzelle einer Lokalisierungszone und einer Zelle einer anderer Lokalisierungszone stattfand;

3. einer Zuordnungsvourichtung zum Neuzuordnen mindestens einer der bestimmten Randzellen zu einer ihr benachbarten Lokalisierungszone, wenn diese Neuzuordnung das Gesamtvolumen an Handovers zwischen Zellen verschiedener Lokalisierungszonen verringert.

Kurzbeschreibung der Zeichnungen

Vorteilhafte Ausführungsformen der Erfindung werden beispielhaft in den Figuren dargestellt. Es zeigen:

Fig. 1 die Prinzipdarstellung des Lokalisierungskonzepts in einem MSC-Bereich
Fig. 2 die Veranschaulichung zur So-Matrix
Fig. 3 den Unterschied von individueller und kombinierten Neuzuordnung
Fig. 4 die Aufteilung von Randzellen in Gruppen

Detaillierte Beschreibung

Nachfolgend wird die Erfindung mit bevorzugten Ausführungsformen in Detail beschrieben.

In der ersten Ausführungsform wird ausgehend von einer gegebenen Aufteilung der Zellen eines MSC-Bereichs in LAs, ein Verfahren zur LA-Neuzuordnung vorgestellt, wobei Gruppen von Zellen zur LA-Neuzuordnung ermittelt werden und das Ergebnis durch eine Readressierung der neuzugeordneten Zellen im Visitor Location Register (VLR) der MSC technisch umgesetzt wird. Dem Verfahren legen empirisch gewonnene Handover-Statistiken zu Grunde.

Ein Kriterium zur Berechnung eine solchen Gruppe besteht darin, dass das Gesamtvolumen der Handovers zwischen Zellen verschiedener LAs (Inter-LA-Handovers), welches sich aus den Handover-Daten vermitteln lässt, durch die Neuzuordnung der Zellen dieser Gruppe möglichst stark reduziert wird. Das erfindungsgemäße Verfahren bezieht sich also auf die Reduktion des im oben genannten Punkt a) benannten Anteils des Signalisierungsaufwands.

Es wird in diesem Zusammenhang darauf hingewiesen, dass das in der Patentmeldung EP 1 238 555 B1 beschriebene Verfahren der hier geschilderten Thematik insofern verwandt ist, als auch dort Handover-Statistiken zu Grunde gelegt werden ("Handoff Statistics" genannt). Dieses Verfahren berücksichtigt jedoch nicht die bestehende LA-Aufteilung eines MSC-Bereichs, sondern zielt auf eine Neukonstruktion dieser Aufteilung ab. Entsprechend hat es alle Zellen des Bereichs - dies sind in der Regel mehrere Hundert - in die Berechnung einzubeziehen.

Im Unterschied dazu bezieht das hier vorgestellten Verfahren der vorliegenden Erfindung nur eine Teilmenge der Zellen eines MSC-Bereichs, nämlich die nachfolgend definierten "Randzellen", in die Betrachtung ein, d.h. sie überprüfen nur diese hinsichtlich eines Wechsels zu einer anderen LA. Die bestehende LA-Aufteilung wird also nicht vollkommen umgeordnet, sondern erfährt Anpassungen lediglich bezüglich der Zellen in den räumlichen Grenzbereichen der LAs.

Vorteile dieses Ansatzes liegen beispielsweise in der Praktikabilität beim Einsatz im Rahmen des in beschriebenen Verbesserungsprozesses, in anderen Worten:

- Die Verfahren liefern als Ergebnis eine relativ zur Gesamtzahl der Zellen eines MSC-Bereich geringe Menge von Zellen zur Neuzuordnung; entsprechend gering ist bei Umsetzung des Ergebnisses der Implementierungsaufwand für die Umstellung im VLR.

- In Rechenprogramme umgesetzt, ergeben sich für die Verfahren kurze Rechenzeiten (s. Abschnitt 4.). Für den praktischen Einsatz bedeutet dies, dass unter Variation des statistischen Eingangsmaterials den Planern schnell mehrere Neuzuordnungsvorschläge bereitgestellt werden können. Dies ist insbesondere dann nützlich, wenn die Entscheidung für eine Neuzuordnung nicht nur von numerisch erfassbaren Kriterien abhängt, sondern zusätzliche, z.B. administrative Randbedingungen zu berücksichtigen hat.

Das erfindungsgemäße Verfahren ermittelt - ausgehend von einer gegebenen Aufteilung der Zellen eines MSC-Bereichs in LAs - Gruppen von Zellen zur LA-Neuzuordnung, wobei die Zellen eines MSC-Bereichs, sowie eine Aufteilung dieser Zellen auf verschiedene Location Areas, gegeben sind. Jede Zelle c ist also genau einer Location Area, LA(c), zugeordnet.

Eine im Verfahren bestimmte Information besteht in einer Handover-Statistik. Diese weist für einen gemeinsamen Beobachtungszeitraum die Anzahl $HO(c_1, c_2)$ aller aufgetretenen Handover-Ereignisse zwischen je zwei Zellen $c_1$ und $c_2$ auf. Der Term "Handover" umfasst sowohl den Zellenwechsel einer MS während einer laufenden Gesprächsverbindung (active mode), als auch die sog. ‚cell reselection' einer sich bewegenden MS im anrufbereiten Zustand (idle mode). Da für die vorliegende Fragestellung die Richtung der Zellenwechsel unerheblich ist, sind in $HO(c_1, c_2)$ beide Richtungen - Wechsel von $c_1$ nach $c_2$ und von $c_2$ nach $c_1$ - addiert. Die Matrix wird daher symmetrisiert, d.h. es ist $HO(c_1, c_2) = HO(c_2, c_1)$ für alle Zellen $c_1, c_2$.

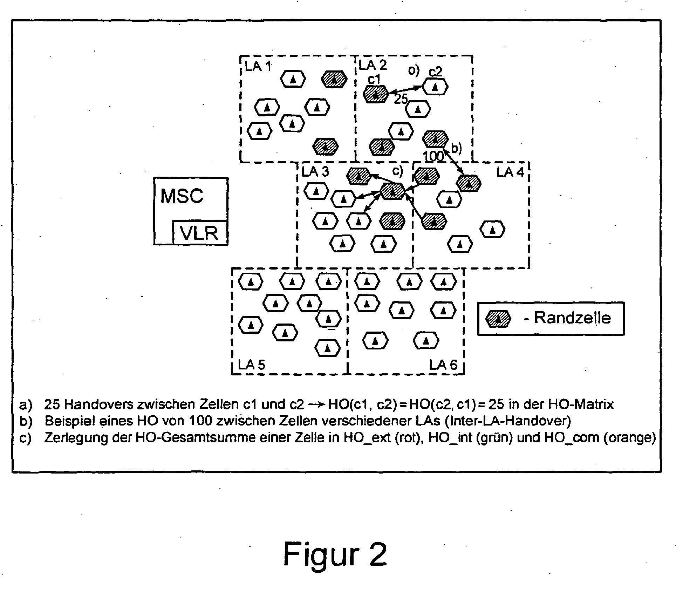

Aus dieser Handover-Matrix lassen sich für jede Zelle c die folgenden Größen bilden, vgl. <u>Figur 2.</u>

| | |
|---|---|
| HO(c) | - Die Summe der Handovers zwischen der Zelle c und allen anderen Zellen; |
| HO_ext(c) | - Die Summe der Handovers zwischen c und solchen Zellen c', für die gilt: LA(c') ≠ LA(c) ("externe HOs"); |
| HO_int(c) | - Die Summe der Handovers zwischen c und solchen Zellen c', für die gilt: LA(c') = LA(c) und HO_ext(c') = 0; |
| HO_com(c) - | Für Zellen mit HO_ext(c) > 0: Die Summe der Handovers zwischen c und solchen Zellen c', für die gilt: LA(c') = LA(c) und HO_ext(c') > 0. |

Alle diese Größen sind nicht-negative ganze Zahlen, und es gilt

$$HO(c) = HO\_ext(c) + HO\_int(c) + HO\_com(c).$$

Die Zellen c, für die HO_ext(c) > 0, heißen Randzellen. Randzellen sind also genau diejenigen Zellen c, bei denen Handover-Ereignisse zu Zellen anderer LAs vorliegen. Die Anzahl dieser LAs wird als Nachbarschaftsgrad der Zelle c, Nb(c), bezeichnet. Hat beispielsweise c externe Handovers nur zu Zellen einer anderen LA, so ist Nb(c) = 1.

Das Gesamtvolumen der Inter-LA-Handovers, also der Handovers zwischen Zellen verschiedener LAs, ergibt sich aus der Summe der HO_ext(c) über alle Randzellen c, dividiert durch 2 (wegen der Symmetrie der HO-Matrix). Ziel des Verfahrens ist die Reduktion dieser Summe durch Änderung der LA-Zuordnung für eine zu berechnende Kombination von Randzellen.

Zur Festlegung der LAs für eine Teilmenge der Randzellen werden Für jede Randzelle die folgenden "Potentiale" Pot1(c) und Pot2(c) definiert:

$$Pot1(c) := HO\_int(c) - HO\_ext(c) - HO\_com(c);$$

$$Pot2(c) := HO\_ext(c) - HO\_int(c) - HO\_com(c).$$

Es gilt. dass, wenn Pot1(c) > 0, die Zelle c ihre bisherige LA-Zuordnung beibehalten muss, da durch einen Wechsel sich das Inter-LA-Handover immer erhöhen würde, und zwar unabhängig von möglichen Neuzuordnungen anderer Zellen.

Wenn dagenen Pot2(c) > 0 und für den Nachbarschaftsgrad Nb(c) = 1 gilt, so wird c dieser Nachbar-LA neu zugeordnet, da das Inler-LA-Handover sich in diesem Fall immer absenken lässt, wiederum unabhängig von möglichen Neuzuordnungen anderer Zellen. Beide Festlegungen sind für die betroffenen Randzellen in dem Sinne optimal, dass sie so auch in der bestmöglichen Lösung vorkommen.

Entsprechend legt dieses erfindungsgemäße Verfahren die LA-Zuordnung für diejenigen Randzellen fest, die eine dieser beiden Bedingungen erfüllen. In Form einer Pseudo-Code-Beschreibung lautet das Verfahren:

```
Für jede Randzelle c:
     Wenn (Pot1(c) > 0), dann LA_neu(c) = LA_alt(c);
     sonst:
                              Wenn (Nb(c) == 1 und Pot2(c) > 0), dann LA_neu(c)
                              = Nachbar-LA(c);
                              sonst: keine Neuzuordnung für c;
Ergebnis:
     Liste der Neuzuordnungen für die Randzellen, auf die das zweite Kriterium zutraf;
     Summe der Inter-LA-Handovers auf Grund der Neuzuordnung; prozentuale Reduzierung der Summe
     gegenüber dem Ausgangszustand
```

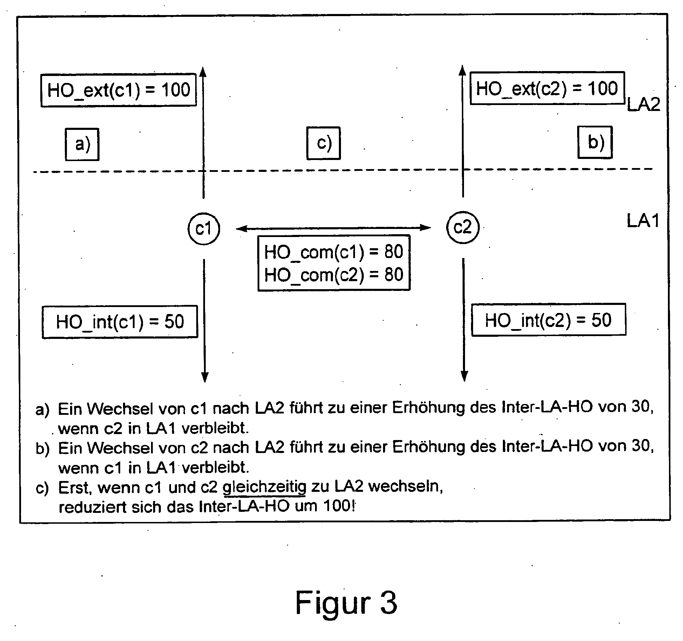

Nachfolgend wird eine zweite Ausführungsform der vorliegenden Erfindung beschrieben, die einer Erweiterung des hier oben beschriebenen Verfahrens entspricht. Dieses erweiterte Verfahren legt also in einem ersten Schritt die LA-Zuordnung der Randzellen fest, die dem ersten oder dem zweiten Kriterien der oben beschriebenen ersten Ausführrungsfonn genügen. Von den verbleibenden Randzellen werden dann im weiteren nur diejenigen vom Nachbarschaftsgrad 1 betrachtet, für die es also nur die Entscheidung zu treffen gilt, ob sie in ihrer LA verbleiben oder zu der eindeutig bestimmten Nachbar-LA wechseln. Ein Problem bei dieser Entscheidung ist, dass sie nicht separat für jede Zelle individuell getroffen werden kann. So kann beispielsweise die gleichzeitige Neuzuordnung zweier Zellen die Summe der Inter-LA-Handovers reduzieren, während dies für jeden einzelnen Wechsel nicht der Fall ist, vgl. Figur 3. Andererseits kann man davon ausgehen, dass dieser Effekt umso stärker ist, je mehr HO-Beziehungen die Zellen miteinander haben, und dass umgekehrt die LA-Zuordnungen von Zellen dann voneinander unabhängig vorgenommen werden können, wenn sie "weit" voneinander entfernt sind, z.B. wenn sie nichtbenachbarten LAs angehören.

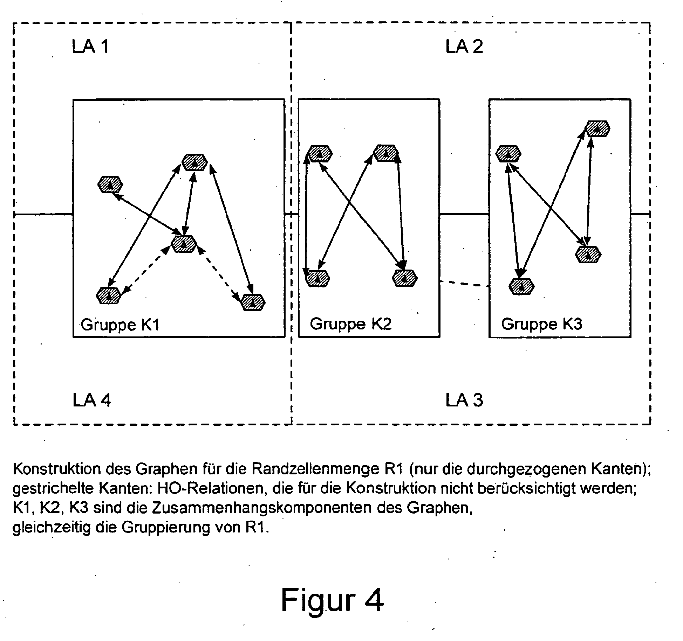

In dieser zweiten Ausführungsform wird die Menge R1 der verbleibenden Randzellen vom Nachbarschaftsgrad 1 in folgender Weise in disjunkte Teilmengen $K_1, ..., K_N$ gruppiert, vgl. Figur 4:

a) Fasse die Menge der Randzellen R1 als Knoten eines Graphen auf (visualisiert als Punkte in der Ebene);
b) Verbinde zwei Knoten c, c' (bilde also eine Kante des Graphen) genau dann, wenn die entsprechenden Randzellen *verschiedenen* LAs angehören und Handovers zwischen c und c' vorhanden sind, also HO(c,c')>0;
c) Im so konstruierten Graph ist im allgemeinen nicht jeder Knoten über einen Kantenzug mit jedem anderen verbunden, d.h. der Graph ist nicht zusammenhängend, sondern er zerfällt in disjunkte, sog. Zusammenhangskomponenten $K_1, ..., K_N$. Dies ist die gewünschte Gruppierung.

Die Erweiterung des Verfahrens gegenüber dem Verfahren der ersten Ausführungsform besteht darin, dass nun separat in jeder Zellengruppe Kj nach einer Kombination von LA-Zuordnungen ihrer Zellen gesucht wird, die die Summe der Inter-LA-Handovers am stärksten reduziert. Dabei bleiben jeweils die anderen Kj, (i≠j), in ihrer Anfangszuordnung festgehalten. Erst nach Durchlauf aller Kj wird aus den Best-Kombinationen je Gruppe als Ergebnis des Verfahrens eine Gesamtkombination gebildet.

Zur Einschränkung des kombinatorischen Aufwands kann erfindungsgemäß ein (frei wählbarer) Parameter G_max (= maximale Gruppengröße) definiert werden, der das Durchlaufen der Neuzuordnungskombinationen beschränkt. Falls eine Gruppe mehr als G_max Zellen besitzt, werden die Zellen c in absteigender Reihenfolge ihres Potentials $Pot2(c)$ sortiert und die ersten G_max Zellen ausgewählt.

In Form einer Pseudo-Code-Beschreibung lautet das erweiterte Verfahren:

```
1. Für jede Randzelle c:
                    Wenn (Pot1(c) > 0), dann LA_neu(c) = LA_alt(c);
                    sonst:
                                    Wenn (Nb(c) = 1) {
                                                    und wenn (Pot2(c) > 0),
                                                    dann LA_neu(c) =
                                                    Nachbar-LA(c);
                                    sonst: füge c zur Menge R1 hinzu;
                                    }
                                    sonst: keine Neuzuordnung für c.
2. Gruppiere die Menge R1 entsprechend der in a), b) und c) beschriebenen
Konstruktion in disjunkte Gruppen K1, ..., KN.
3. Für j=1,...,N:
                    Sei nj die Anzahl der Zellen der Gruppe Kj;
                    wenn nJ > G_max:
                                    sortiere die Zellen c von Kj in absteigender Reihenfolge
                                    ihres Potentials
                                    Pot2(c) und wähle die ersten G_max Zellen aus;
                                    setze dann nj := G_max;

                    für k = 1,...,nj :
                                    Berechne für alle Möglichkeiten, k der nj Zellen gleichzeitig
                                    ihrer
                                    Nachbar-LA zuzuordnen, die daraus resultierende
                                    Summe der Inter-LA-
                                    Handovers;
                                    unterschreitet diese Summe das bisher bestgefundene
                                    Ergebnis, so
                                    speichere die Kombination auf bestComb(j) ab;

4. Fasse die in bestComb(j) (j = 1, ...,N) festgehaltenen Neuzuordnungen zu einer Kombination bestComb_total von
LA-Neuzuordnungen zusammen.

5. Ergebnis:
Liste der gefundenen Neuzuordnungen aus 1. und 4.;
                                    Summe der Inter-LA-Handovers auf Grund der
                                    Neuzuordnung
                                    bestComb_total;
                                    prozentuale Reduzierung der Summe gegenüber dem
                                    Anfangszustand
```

Die beschriebenen Ausführungsformen der vorliegenden Erfindung können iterativ ausgeführt werden, wobei in jedem erfolgreichen Iterationsschritt die Summe der Inter-LA-Handovers reduziert wird. Dabei wird für jeden Iterationsschritt die im vorhergehenden Schritt erzielten LA-Zuordnungen als Startkonfiguration gesetzt, die dann z. B. durch die erfindungsgemäßen Verfahren der ersten oder zweiten Ausführungsform zu verbessern sind. Die Iteration wird abgebrochen, wenn beispielsweise keine Verbesserung mehr erzielt wurde oder wenn die Anzahl der bisherigen Iterationen einen (frei wählbaren) Parameterwert max_Iter überschreitet.

Beispiele der erfindungsgemäßen Iterationsroutine:

---

Erste Ausführungsform - iterativ:

1. Initialschritt: Wende Verfahren 1 auf die durch die Eingangsdaten gegebene LA-Zuordnung der Zellen, Z_initial, an. Bezeichne mit $Z_0$ das Ergebnis, also die ermittelte Neuzuordnung, und mit $S_0$ die reduzierte Summe der Inter-LA-Handovers.

2. Setze Z_best = $Z_0$ und S_best = $S_0$.

3. Für i = 1, ..., max_Iter:

Wende Verfahren 1 auf die Zuordnung Z_best an. Bezeichne mit $Z_i$ die ermittelte Neuzuordnung, und mit $S_i$ die resultierende Summe der Inter-LA-Handovers.

Wenn                              ($S_i$ < S_best), dann aktualisiere:

S_best = $S_i$,

Z_best = $Z_i$ ;

sonst:                              Abbruch der Iteration

4. Ergebnis:

Liste der gefundenen Neuzuordnungen Z_best;

Summe S_best der Inter-LA-Handovers auf Grund der Neuzuordnung;

prozentuale Reduzierung der Summe gegenüber dem Anfangszustand Z_initial.

---

---

Zweite Ausführungsform - iterativ:

1. Initialschritt: Wende Verfahren 2 auf die durch die Eingangsdaten gegebene LA-Zuordnung der Zellen, Z_initial, an. Bezeichne mit $Z_0$ das Ergebnis, also die ermittelte Neuzuordnung, und mit $S_0$ die reduzierte Summe der Inter-LA-Handovers.

2. Setze Z_best = $Z_0$ und S_best = $S_0$.

3. Für i = 1, ..., max_Iter:

Wende Verfahren 2 auf die Zuordnung Z_best an. Bezeichne mit $Z_i$ die ermittelte Neuzuordnung, und mit $S_i$ die resultierende Summe der Inter-LA-Handovers.

Wenn ($S_i$ < S_best), dann aktualisiere:

S_best = $S_i$,

Z_best = $Z_i$ ;

sonst:                              Abbruch der Iteration

4. Ergebnis:

Liste der gefundenen Neuruordnungen Z_best;

Summe S_best der Inter-LA-Handovers auf Grund der Neuruordnung;

prozentuale Reduzierung der Summe gegenüber dem Anfangszustand Z_initial.

---

**Ergebnisse der erfindungsgemäßen Verfahren anhand von Testbeispielen**

Die hier oben beschriebenen erfindungsgemäßen Verfahren wurden prototypisch in Rechenprogramme umgesetzt und auf einem Pentium4-PC (CPU 3 GHz, RAM 1 GB) anhand von sechs realen MSC-Bereichen getestet, wobei für jeden Bereich empirische HO-Daten vorlagen. Die Kenngrößen der Testbeispiele sind in Tabelle 1 zusammengefasst.

Tabelle 1: Kenngrößen der Testbeispiele

| Testbeispiel | LAs | Zellen | Randzellen | HO_total | HO_interLA |
|---|---|---|---|---|---|
| 1 | 10 | 782 | 369 | 8.196.939 | 661.365 |

(fortgesetzt)

| Testbeispiel | LAs | Zellen | Randzellen | HO_total | HO_interLA |
|---:|---:|---:|---:|---:|---:|
| 2 | 14 | 991 | 446 | 8.980.173 | 689.912 |
| 3 | 5 | 499 | 300 | 6.961.695 | 974.011 |
| 4 | 12 | 1115 | 450 | 10.028.576 | 724.254 |
| 5 | 5 | 604 | 191 | 6.455.977 | 319.085 |
| 6 | 6 | 568 | 226 | 6.526.961 | 623.413 |

Die Tabellen 2 und 3 zeigen die Ergebnisse der Anwendung von den oben beschriebenen erfindungsgemäßen Ausführungformen auf die Testbeispiele. Für die iterativen Varianten wurden die Ergebnisse alle mit wenigen Iterationen erreicht (der Parameter max_Iter wurde auf 8 gesetzt).

Tabelle 2: Ergebnisse - erste Ausführungsform

| Testbeispiel | Erste Ausführungsform (ohne Iteration) | | | Erste Ausführungsform - iterativ | | | |
|---|---|---|---|---|---|---|---|
| | LA-Neuzuordnungen | Ergebnis HO_interLA | Reduktion in % | LA-Neuzuordnungen | Ergebnis HO_interLA | Reduktion in % | Anzahl Iterationen |
| 1 | 21 | 586.917 | 11,26 | 23 | 571.347 | 13,61 | 2 |
| 2 | 17 | 631.299 | 8,50 | 20 | 601.285 | 12,85 | 2 |
| 3 | 26 | 836.453 | 14,12 | 29 | 750.906 | 22,91 | 4 |
| 4 | 30 | 680.602 | 6,03 | 28 | 618.454 | 14,61 | 4 |
| 5 | 23 | 274.135 | 14,09 | 12 | 241.647 | 24,27 | 2 |
| 6 | 20 | 517.038 | 17,06 | 20 | 517.038 | 17,06 | 1 |
| Rechenzeit (Summe aller Testfälle) | 52 sec | | | 166 sec | | | |

Tabelle 3: Ergebnisse - zweite Ausführungsform

| Testbeispiel | Zweite Ausführungsform (ohne Iteration) | | | Zweite Ausführungsform - iterativ | | | |
|---|---|---|---|---|---|---|---|
| | LA-Neuzuordnungen | Ergebnis HO_interLA | Reduktion in % | LA-Neuzuordnungen | Ergebnis HO_interLA | Reduktion in % | Anzahl Iterationen |
| 1 | 33 | 576.318 | 12,86 | 32 | 564.667 | 14,62 | 2 |
| 2 | 32 | 606.656 | 12,07 | 29 | 588.038 | 14,77 | 2 |
| 3 | 26 | 836.453 | 14,12 | 31 | 745.678 | 23,44 | 4 |
| 4 | 38 | 647.770 | 10,56 | 38 | 578.791 | 20,08 | 5 |
| 5 | 26 | 268.730 | 15,78 | 15 | 238.150 | 25,36 | 2 |
| 6 | 27 | 510.252 | 18,15 | 30 | 505.310 | 18,94 | 2 |
| Rechenzeit (Summe aller Testfälle) | 371 sec | | | 1.588 sec | | | |

Die Ergebnisse zeigen, dass die Summe der Inter-LA-Handovers in den meisten Fällen bereits durch die erfindungsgemäßen Verfahren ohne Iteration deutlich reduziert wird. Die Anwendung der iterativen Varianten führt zu teilweise deutlichen, teilweise geringfügigen Verbesserungen, wobei die Iteration der zweiten Ausführungsform etwas bessere Resultate als die Iteration der ersten Ausführungsform liefert. In allen Fällen ist die ermittelte Anzahl der LA-Neuzuordnungen klein gegenüber der Gesamtzahl der Randzellen. Besonders Testbeispiel 5 macht deutlich, dass es für die Absenkung der Summe der Inter-LA-Handovers nicht auf die Anzahl der LA-Neuzuordnungen ankommt, sondern auf die Auswahl der Zellen.

**Patentansprüche**

1. Verfahren zur Neuzuordnung von Zellen einer ausgewählten Zellengruppe eines zellulären Mobilfunknetzen zu Lokalisierungszonen (LA1, ..., LA6), wobei die Zellen der ausgewählten Zellengruppe in mindestens zwei Lokalisierungszonen des Mobilfunknetzes aufgeteilt sind, mit den Schritten:

   a. Bestimmen und Speichern der Anzahl der Handover-Ereignisse, die in einem Beobachtungszeitraum zwischen je zwei Zellen ($c_1$, $c_2$) der ausgewählten Zellengruppe stattfinden;
   b. Auswerten der gespeicherten Anzahl der Handover-Ereignisse zur Bestimmung der Randzellen der ausgewählten Zellengruppe, bei denen mindestens ein Handover-Ereignis zwischen dieser Randzelle einer Lokalisierungszone und einer Zelle einer anderen Lokalisierungszone stattfand;
   **gekennzeichnet durch**
   c. Neuzuordnen mindestens einer der bestimmten Randzellen zu einer ihr benachbarten Lokalisierungszone, wenn diese Neuzuordnung das Gesamtvolumen an Handovers zwischen Zellen verschiedener Lokalisierungszonen verringert;

   wobei das Neuzuordnen mindestens einer der bestimmten Randzellen zu einer ihr benachbarten Lokalisierungszone eine Auswertung einer Randzelle c aufweist, wobei die Summe $HO\_ext(c)$ der Handovers zwischen der Randzelle c und solchen Zellen, die anderen Lokalisierungzonen zugeordnet sind, bestimmt wird;
   wobei das Neuzuordnen mindestens einer der bestimmten Randzellen zu einer ihr benachbarten Lokalisierungszone eine Auswertung einer Randzelle c aufweist, wobei die Summe $HO\_int(c)$ der Handovers zwischen der Randzelle c und solchen Zellen c', die sowohl die Bedingung $HO\_ext(c')=0$ erfüllen als auch der Lokalisierungzone der Randzelle c zugeordnet sind, bestimmt wird;
   wobei das Neuzuordnen mindestens einer der bestimmten Randzellen zu einer ihr benachbarten Lokalisierungszone eine Auswertung einer Randzelle c, die $HO\_ext(c)>0$ erfüllt, aufweist, wobei die Summe $HO\_com(c)$ der Handovers zwischen der Randzelle c und solchen Zellen c', die sowohl die Bedingung $HO\_ext(c')>0$ erfüllen als auch der Lokalisierungzone der Randzelle c zugeordnet sind, bestimmt wird; und
   wobei das Neuzuordnen mindestens einer der bestimmten Randzellen zu einer ihr benachbarten Lokalisierungszone eine Auswertung des Nachbarschaftsgrades Nb(c) einer Randzelle c aufweist, wobei der Nachbarschaftsgrad Nb(c) der Anzahl der benachbarten Lokalisierungszonen, mit denen die Randzelle c in dem Beobachtungszeitraum Handovers durchgeführt hat, entspricht.

2. Verfahren nach Anspruch 1, wobei Anzahl der Handover-Ereignisse in einer Matrix gespeichert werden.

3. Verfahren nach Anspruch 2, wobei die Matrix symmetrisiert wird

4. Verfahren nach einem der vorhergehenden Ansprüche, wobei die ausgewählte Zellengruppe einem Versorgungsbereich eines Vermittlungsknotens des Mobilfunknetzes entspricht.

5. Verfahren nach einem der vorhergehenden Ansprüche, wobei das Neuzuordnen mindestens einer der bestimmten Randzellen zu einer ihr benachbarten Lokalisierungszone eine Auswertung der Potentiale $Pot1(c) = HO\_int(c)-HO\_ext(c)-HO\_com(c)$ und $Pot2(c)=HO\_ext(c)-HO\_int(c)-HO\_com(c)$ einer Randzelle c aufweist.

6. Verfahren nach Anspruch 5, wobei beim Neuzuordnen mindestens einer der bestimmten Randzellen zu einer ihr benachbarten Lokalisierungszone eine Randzelle c keiner neuen Lokalisierungszone zugeordnet wird, wenn diese Randzelle c die Bedingung $Pot1(c)>0$ erfüllt.

7. Verfahren nach einem der Ansprüche 5 oder 6, wobei beim Neuzuordnen mindestens einer der bestimmten Randzellen zu einer ihr benachbarten Lokalisierungszone eine Randzelle c der ihr benachbarten Lokalisierungszone zugeordnet wird, wenn diese Randzelle c die Bedingungen $Pot2(c)>0$ und $Nb(c)=1$ erfüllt.

8. Verfahren nach Anspruch 7, wobei beim Neuzuordnen mindestens einer der bestimmten Randzellen zu einer ihr benachbarten Lokalisierungszone eine Randzelle c in eine Gruppierungsmenge R1 aufgenommen wird, wenn diese Randzelle c die Bedingung $Nb(c) = 1$ erfüllt, aber die Bedingungen $Pot1(c)>0$ und $Pot2(c)>0$ nicht erfüllt.

9. Verfahren nach Anspruch 8, wobei beim Neuzuordnen mindestens einer der bestimmten Randzellen zu einer ihr benachbarten Lokalisierungszone die in die Gruppierungsmenge R1 aufgenommenen Randzellen in disjunkte Gruppen gruppiert werden.

10. Verfahren nach Anspruch 9, wobei die Gruppierung der in die Gruppierungsmenge R1 aufgenommenen Randzellen, die Schritte aufweist:

   - Auffassen der Menge der Randzellen R1 als Knoten eines Graphen;
   - Verbinden zweier der Knoten im Graphen, wenn die entsprechenden Randzellen verschiedenen Lokalisierungszonen zugeordnet sind und Handovers zwischen diesen Knoten vorhanden sind;
   - Bestimmung der Zusammenhangskomponenten dieses Graphen;
   - Gruppierung der Randzellen R1 in disjunkte Gruppen über die Identifikation einer Gruppe mit einer der Zusammenhangskomponenten.

11. Verfahren nach einem der Ansprüche 9 oder 10, wobei die Anzahl der in disjunkte Gruppen gruppierten Randzellen auf die maximale Gruppengröße G_max beschränkt wird.

12. Verfahren nach Anspruch 11, wobei die in disjunkte Gruppen gruppierten Randzellen in absteigender Reihenfolge ihres Potentials $Pot2(c)$ sortiert werden und die ersten G_max Randzellen der absteigenden Reihenfolge ausgewählt werden.

13. Verfahren nach einem der Ansprüche 9 bis 12, wobei in jeder der disjunkten Gruppen diejenige Kombination von Randzellen zur Neuzuordnung zu ihnen benachbarten Lokalisierungszonen bestimmt wird, die das Gesamtvolumen an Handovers zwischen Zellen verschiedener Lokalisierungszonen am stärksten verringert.

14. Verfahren nach Anspruch 12, wobei die gefundenen Kombinationen je Gruppe zu einer Gesamtkombination von Randzellen zur Neuzuordnung zu ihnen benachbarten Lokalisierungszonen zusammengefasst wird.

15. Verfahren nach einem der vorhergehenden Ansprüche, wobei die Schritte a, b und c in iterativen Schritten wiederholt werden.

16. Verfahren nach Anspruch 15, wobei die Iteration abgebrochen wird, wenn im Schritt c keine Neuzuordnung bestimmt wird, die das Gesamtvolumen an Handovers zwischen Zellen verschiedener Lokalisierungszonen verringert.

17. Verfahren nach Anspruch 15 oder 16, wobei die Anzahl der Iterationsschritte auf einen vorbestimmten Grenzwert max_Iter begrenzt wird.

18. System zur Neuzuordnung von Zellen einer ausgewählten Zellengruppe eines zellulären Mobilfunknetzen zu Lokalisierungszonen (LA1, ..., LA6), wobei die Zellen der ausgewählten Zellengruppe in mindestens zwei Lokalisierungszonen des Mobilfunknetzes aufgeteilt sind, mit:

   a. einer Datenerfassungsvorrichtung zum Bestimmen und Speichern der Anzahl der Handover-Ereignisse, die in einem Beobachtungszeitraum zwischen je zwei Zellen (C1,C2) der ausgewählten Zellengruppe stattfinden;
   b. einer Auswertevorrichtung zum Auswerten der gespeicherten Anzahl der Handover-Ereignisse zur Bestimmung der Randzellen der ausgewählten Zellengruppe, bei denen mindestens ein Handover-Ereignis zwischen dieser Randzelle einer Lokalisierungszone und einer Zelle einer anderen Lokalisierungszone stattfand;
   **dadurch gekennzeichnet, dass** das System ferner aufweist:
   c. eine Zuordnungsvorrichtung zum Neuzuordnen mindestens einer der bestimmten Randzellen zu einer ihr benachbarten Lokalisierungszone, wenn diese Neuzuordnung das Gesamtvolumen an Handovers zwischen Zellen verschiedener Lokalisierungszonen verringert;

wobei das Neuzuordnen mindestens einer der bestimmten Randzellen zu einer ihr benachbarten Lokalisierungszone eine Auswertung einer Randzelle c aufweist, wobei die Summe HO_ext(c) der Handovers zwischen der Randzelle c und solchen Zellen, die anderen Lokalisierungzonen zugeordnet sind, bestimmt wird;

wobei das Neuzuordnen mindestens einer der bestimmten Randzellen zu einer ihr benachbarten Lokalisierungszone eine Auswertung einer Randzelle c aufweist, wobei die Summe HO_int(c) der Handovers zwischen der Randzelle c und solchen Zellen c', die sowohl die Bedingung HO_ext(c')=0 erfüllen als auch der Lokalisierungzone der Randzelle c zugeordnet sind, bestimmt wird;

wobei das Neuzuordnen mindestens einer der bestimmten Randzellen zu einer ihr benachbarten Lokalisierungszone eine Auswertung einer Randzelle c, die HO_ext(c)>0 erfüllt, aufweist, wobei die Summe HO_com(c) der Handovers zwischen der Randzelle c und solchen Zellen c', die sowohl die Bedingung HO_ext(c')>0 erfüllen als auch der Lokalisierungzone der Randzelle c zugeordnet sind, bestimmt wird; und

wobei das Neuzuordnen mindestens einer der bestimmten Randzellen zu einer ihr benachbarten Lokalisierungszone eine Auswertung des Nachbarschaftsgrades Nb(c) einer Randzelle c aufweist, wobei der Nachbarschaftsgrad Nb(c) der Anzahl der benachbarten Lokalisierungszonen, mit denen die Randzelle c in dem Beobachtungszeitraum Handovers durchgeführt hat, entspricht.

19. Computerprogrammprodukt mit Codemitteln, die dazu eingerichtet sind, alle Schritte des Verfahrens nach einem der Ansprüche 1 bis 17 auszuführen, wenn das Computerprogramm auf einem Computer abläuft..

20. Digitales Speichermedium mit einem Computerprogrammprodukt nach Anspruch 19.

**Claims**

1. Method for reassigning cells of a selected cell group of a cellular mobile telephone network to location areas (LA1, ..., LA6), wherein the cells of the selected cell group are divided into at least two location areas of the mobile telephone network, having the steps:

   a) determining and storing the number of handover events that take place between pairs of cells (c1, c2) of the selected cell group during an observation period;
   b) evaluating the stored number of handover events for determining the peripheral cells of the selected cell group in which at least one handover event took place between this peripheral cell of a location area and a cell of another location area;
   **characterized by**
   c) reassignment of at least one of the determined peripheral cells to a location area adjacent to it if this reassignment reduces the total volume of handovers between cells of different location areas;

   wherein the reassignment of at least one of the determined peripheral cells to a location area adjacent to it includes an evaluation of a peripheral cell c, wherein the sum HO_ext(c) of handovers between the peripheral cell c and those cells that are assigned to other location areas is determined;
   wherein the reassignment of at least one of the determined peripheral cells to a location area adjacent to it includes an evaluation of a peripheral cell c, wherein the sum HO_int(c) of handovers between the peripheral cell c and those cells c' that both fulfill the condition HO_ext(c')=0 and are also assigned to the location area of the peripheral cell c is determined;
   wherein the reassignment of at least one of the determined peripheral cells to a location area adjacent to it includes an evaluation of a peripheral cell c that fulfills HO_ext(c)>0, wherein the sum HO_com(c) of handovers between the peripheral cell c and those cells c' that both fulfill the condition HO_ext(c')>0 and are also assigned to the location area of the peripheral cell c is determined; and
   wherein the reassignment of at least one of the determined peripheral cells to a location area adjacent to it includes an evaluation of the degree of proximity Nb(c) of a peripheral cell c, wherein the degree of proximity Nb(c) corresponds to the number of adjacent location areas with which the peripheral cell c has carried out handovers during the observation period.

2. Method according to claim 1, wherein the number of handover events is stored in a matrix.

3. Method according to claim 2, wherein the matrix is symmetrized.

4. Method according to any one of the preceding claims, wherein the selected cell group corresponds to a service area of a switching node of the mobile telephone network.

5. Method according to any one of the preceding claims, wherein the reassignment of at least one of the determined peripheral cells to a location area adjacent to it includes an evaluation of the potentials $Pot1(c) = HO\_int(c)-HO\_ext(c)-HO\_com(c)$ and $Pot2(c) = HO\_ext(c)-HO\_int(c)-HO\_com(c)$ of a peripheral cell c.

6. Method according to claim 5, wherein, during reassignment of at least one of the determined peripheral cells to a location area adjacent to it, a peripheral cell c is not assigned to a new location area if this peripheral cell c fulfills the condition $Pot1(c)>0$.

7. Method according to either claim 5 or 6, wherein, during reassignment of at least one of the determined peripheral cells to a location area adjacent to it, a peripheral cell c is assigned to the location area adjacent to it if this peripheral cell c fulfills the conditions $Pot2(c)>0$ and $Nb(c)=1$.

8. Method according to claim 7, wherein, during reassignment of at least one of the determined peripheral cells to a location area adjacent to it, a peripheral cell c is included in a grouping set R1 if this peripheral cell c fulfills the condition $Nb(c)=1$ but does not fulfill the conditions $Pot1(c)>0$ and $Pot2(c)>0$.

9. Method according to claim 8, wherein, during reassignment of at least one of the determined peripheral cells to a location area adjacent to it, the peripheral cells included in the grouping set R1 are grouped into disjoint groups.

10. Method according to claim 9, wherein the grouping of the peripheral cells included in the grouping set R1 has the steps:

   - interpreting the set of peripheral cells R1 as nodes of a graph;
   - connecting two of the nodes in the graph if the corresponding peripheral cells are assigned to different location areas and handovers are present between these nodes;
   - determining the connected components of this graph;
   - grouping the peripheral cells R1 into disjoint groups by identification of a group with one of the connected components.

11. Method according to either claim 9 or 10, wherein the number of the peripheral cells grouped into disjoint groups is restricted to the maximum group size G_max.

12. Method according to claim 11, wherein the peripheral cells grouped into disjoint groups are sorted in descending order of their potential $Pot2(c)$ and the first G_max peripheral cells of the descending order are selected.

13. Method according to any one of claims 9 through 12, wherein, in each of the disjoint groups, the combinations of peripheral cells that maximally reduce the total volume of handovers between cells of different location areas are determined for reassignment to location areas adjacent to them.

14. Method according to claim 12, wherein the combinations found for each group are combined into an overall combination of peripheral cells for reassignment to location areas adjacent to them.

15. Method according to any one of the preceding claims, wherein the steps a, b, and c are repeated in iterative steps.

16. Method according to claim 15, wherein the iteration is terminated if no reassignment is determined in step c that reduces the total volume of handovers between cells of different location areas.

17. Method according to claim 15 or 16, wherein the number of iteration steps is restricted to a predetermined limit max_Iter.

18. System for reassigning cells of a selected cell group of a cellular mobile telephone network to location areas (LA1, ..., LA6), wherein the cells of the selected cell group are divided into at least two location areas of the mobile telephone network, having:

   a) a data capture device for determining and storing the number of handover events that take place in an observation period between pairs of cells (cl, c2) of the selected cell group;
   b) an evaluation device for evaluating the stored number of handover events for determining the peripheral cells of the selected cell group in which at least one handover event took place between this peripheral cell of a location area and a cell of another location area;

**characterized in that** the system additionally has:

   c) an assignment device for reassignment of at least one of the determined peripheral cells to a location area adjacent to it if this reassignment reduces the total volume of handovers between cells of different location areas;

wherein the reassignment of at least one of the determined peripheral cells to a location area adjacent to it includes an evaluation of a peripheral cell c, wherein the sum $HO\_ext(c)$ of handovers between the peripheral cell c and those cells that are assigned to other location areas is determined;

wherein the reassignment of at least one of the determined peripheral cells to a location area adjacent to it includes an evaluation of a peripheral cell c, wherein the sum $HO\_int(c)$ of handovers between the peripheral cell c and those cells c' that both fulfill the condition $HO\_ext(c')=0$ and are also assigned to the location area of the peripheral cell c is determined;

wherein the reassignment of at least one of the determined peripheral cells to a location area adjacent to it includes an evaluation of a peripheral cell c that fulfills $HO\_ext(c)>0$, wherein the sum $HO\_com(c)$ of handovers between the peripheral cell c and those cells c' that both fulfill the condition $HO\_ext(c')>0$ and are also assigned to the location area of the peripheral cell c is determined; and

wherein the reassignment of at least one of the determined peripheral cells to a location area adjacent to it includes an evaluation of the degree of proximity $Nb(c)$ of a peripheral cell c, wherein the degree of proximity $Nb(c)$ corresponds to the number of adjacent location areas with which the peripheral cell c has carried out handovers during the observation period.

**19.** Computer program product with code means that are designed to execute all steps of the method according to any one of claims 1 through 17 when the computer program is running on a computer.

**20.** Digital storage medium with a computer program product according to claim 19.

## Revendications

**1.** Procédé de réaffectation de cellules d'un groupe de cellules choisi d'un réseau de radiocommunication mobile cellulaire à des zones de localisation (LA1, ..., LA6), les cellules du groupe de cellules choisi étant réparties entre au moins deux zones de localisation du réseau de radiocommunication mobile, comprenant les étapes :

   a. détermination et enregistrement du nombre de transferts intercellulaires qui ont lieu dans une période d'observation entre respectivement deux cellules (c1, c2) du groupe de cellules choisi ;

   b. analyse du nombre enregistré de transferts intercellulaires pour déterminer les cellules de bordure du groupe de cellules choisi pour lesquelles au moins un transfert intercellulaire a eu lieu entre cette cellule de bordure d'une zone de localisation et une cellule d'une autre zone de localisation ;

   **caractérisé par**

   c. réaffectation d'au moins une des cellules de bordure déterminées à une zone de localisation qui lui est voisine, si cette réaffectation réduit le volume total de transferts intercellulaires entre des cellules de zones de localisation différentes,

la réaffectation d'au moins une des cellules de bordure déterminées à une zone de localisation qui lui est voisine comportant une analyse d'une cellule de bordure c, dans laquelle la somme $HO\_ext(c)$ des transferts intercellulaires entre la cellule de bordure c et des cellules affectées à d'autres zones de localisation est déterminée ;

la réaffectation d'au moins une des cellules de bordure déterminées à une zone de localisation qui lui est voisine comportant une analyse d'une cellule de bordure c, dans laquelle la somme $HO\_int(c)$ des transferts intercellulaires entre la cellule de bordure c et des cellules c' qui remplissent non seulement la condition $HO\_ext(c')=O$ mais qui sont également affectées à la zone de localisation de la cellule de bordure c, est déterminée ;

la réaffectation d'au moins une des cellules de bordure déterminées à une zone de localisation qui lui est voisine comportant une analyse d'une cellule de bordure c, qui remplit la condition $HO\_ext(c)>0$, dans laquelle la somme $HO\_com(c)$ des transferts intercellulaires entre la cellule de bordure c et des cellules c' qui remplissent non seulement la condition $HO\_ext(c')>0$ mais qui sont également affectées à la zone de localisation de la cellule de bordure c, est déterminée ; et

la réaffectation d'au moins une des cellules de bordure déterminées à une zone de localisation qui lui est voisine comportant une analyse du degré de voisinage $Nb(c)$ d'une cellule de bordure c, le degré de voisinage $Nb(c)$ correspondant au nombre des zones de localisation voisines avec lesquelles la cellule de bordure c a effectué des transferts intercellulaires dans la période d'observation.

**2.** Procédé selon la revendication 1, dans lequel le nombre de transferts intercellulaires est enregistré dans une matrice.

**3.** Procédé selon la revendication 2, dans lequel la matrice est symétrisée.

**4.** Procédé selon l'une des revendications précédentes, dans lequel le groupe de cellules choisi correspond à une zone de couverture d'un noeud de commutation du réseau de radiocommunication mobile.

**5.** Procédé selon l'une des revendications précédentes, dans lequel la réaffectation d'au moins une des cellules de bordure déterminées à une zone de localisation qui lui est voisine comporte une analyse des potentiels Pot1(c) = HO_int(c) - HO_ext(c) - HO_com(c) et Pot2(c) = HO_ext(c) - HO_int(c) - HO_com(c) d'une cellule de bordure c.

**6.** Procédé selon la revendication 5, dans lequel une cellule de bordure c ne sera pas affectée à une nouvelle zone de localisation lors de la réaffectation d'au moins une des cellules de bordure déterminées à une zone de localisation qui lui est voisine, si cette cellule de bordure c remplit la condition Pot1(c)>0.

**7.** Procédé selon l'une des revendications 5 ou 6, dans lequel une cellule de bordure c sera affectée à une zone de localisation qui lui est voisine lors de la réaffectation d'au moins une des cellules de bordure déterminées à une zone de localisation qui lui est voisine, si cette cellule de bordure c remplit les conditions Pot2(c)>0 et Nb(c)=1.

**8.** Procédé selon la revendication 7, dans lequel une cellule de bordure c sera intégrée à un ensemble de groupement R1 lors de la réaffectation d'au moins une des cellules de bordure déterminées à une zone de localisation qui lui est voisine, si cette cellule de bordure c remplit la condition Nb(c) = 1 mais ne remplit pas les conditions Pot1(c)>0 et Pot2(c)>0.

**9.** Procédé selon la revendication 8, dans lequel les cellules de bordure intégrées à l'ensemble de groupement R1 sont groupées en groupes disjoints lors de la réaffectation d'au moins une des cellules de bordure déterminées à une zone de localisation qui lui est voisine.

**10.** Procédé selon la revendication 9, dans lequel le groupement des cellules de bordure intégrées à l'ensemble de groupement R1 comprend les étapes :

- considération de l'ensemble des cellules de bordure R1 comme noeuds d'un graphe ;
- liaison de deux noeuds dans le graphe si les cellules de bordure correspondantes sont affectées à des zones de localisation différents et si des transferts intercellulaires entre ces noeuds existent ;
- détermination des composantes connexes de ce graphe ;
- groupement des cellules de bordure R1 en groupes disjoints par identification d'un groupe à une des composantes connexes.

**11.** Procédé selon l'une des revendications 9 ou 10, dans lequel le nombre des cellules de bordure groupées en groupes disjoints est limité à la taille de groupe maximale G_max.

**12.** Procédé selon la revendication 11, dans lequel les cellules de bordure groupées en groupes disjoints sont triées par ordre décroissant de leur potentiel Pot2(c) et les premières cellules de bordure G_max de l'ordre décroissant sont choisies.

**13.** Procédé selon l'une des revendications 9 ou 12, dans lequel dans chacun des groupes disjoints la combinaison de cellules de bordure choisie pour la réaffectation à des zones de localisation qui leur sont voisines est celle que réduit le plus le volume total de transferts intercellulaires entre les cellules de zones de localisation différentes.

**14.** Procédé selon la revendication 12, dans lequel les combinaisons trouvées sont réunies par groupe à une combinaison globale de cellules de bordure pour la réaffectation à des zones de localisation qui leur sont voisines.

**15.** Procédé selon l'une des revendications précédentes, dans lequel les étapes a, b et c sont répétées dans des étapes itératives.

**16.** Procédé selon la revendication 15, dans lequel l'itération sera interrompue si, à l'étape c, aucune réaffectation réduisant le volume total de transferts intercellulaires entre des cellules de zones de localisation différentes n'est déterminée.

**17.** Procédé selon l'une des revendications 15 ou 16, dans lequel le nombre d'étapes itératives est limité à une valeur limite max_Iter prédéterminée.

**18.** Système de réaffectation de cellules d'un groupe de cellules choisi d'un réseau de radiocommunication mobile cellulaire à des zones de localisation (LA1, ..., LA6), les cellules du groupe de cellules choisi étant réparties entre au moins deux zones de localisation du réseau de radiocommunication mobile, comprenant :

  a. un dispositif de saisie de données pour déterminer et enregistrer le nombre de transferts intercellulaires qui ont lieu dans une période d'observation entre respectivement deux cellules (cl, c2) du groupe de cellules choisi ;

  b. un dispositif d'analyse pour analyser le nombre enregistré de transferts intercellulaires pour déterminer les cellules de bordure du groupe de cellules choisi pour lesquelles au moins un transfert intercellulaire a eu lieu entre cette cellule de bordure d'une zone de localisation et une cellule d'une autre zone de localisation ;

  **caractérisé en ce que** le système comprend également :

  c. un dispositif d'affectation pour réaffecter au moins une des cellules de bordure déterminées à une zone de localisation qui lui est voisine, si cette réaffectation réduit le volume total de transferts intercellulaires entre les cellules de zones de localisation différentes,

la réaffectation d'au moins une des cellules de bordure déterminées à une zone de localisation qui lui est voisine comportant une analyse d'une cellule de bordure c, dans laquelle la somme HO_ext(c) des transferts intercellulaires entre la cellule de bordure c et des cellules affectées à d'autres zones de localisation est déterminée ;

la réaffectation d'au moins une des cellules de bordure déterminées à une zone de localisation qui lui est voisine comportant une analyse d'une cellule de bordure c, dans laquelle la somme HO_int(c) des transferts intercellulaires entre la cellule de bordure c et des cellules c' qui remplissent non seulement la condition HO_ext(c')=0 mais qui sont également affectées à la zone de localisation de la cellule de bordure c, est déterminée ;

la réaffectation d'au moins une des cellules de bordure déterminées à une zone de localisation qui lui est voisine comportant une analyse d'une cellule de bordure c, qui remplit la condition HO_ext(c)>0, dans laquelle la somme HO_com(c) des transferts intercellulaires entre la cellule de bordure c et des cellules c' qui remplissent non seulement la condition HO_ext(c')>0 mais qui sont également affectées à la zone de localisation de la cellule de bordure c, est déterminée ; et

la réaffectation d'au moins une des cellules de bordure déterminées à une zone de localisation qui lui est voisine comportant une analyse du degré de voisinage Nb(c) d'une cellule de bordure c, le degré de voisinage Nb(c) correspondant au nombre des zones de localisation voisines avec lesquelles la cellule de bordure c a effectué des transferts intercellulaires dans la période d'observation.

**19.** Produit de programme d'ordinateur comprenant des moyens de code conçus pour exécuter l'ensemble des étapes du procédé selon l'une des revendications 1 à 17, si le programme d'ordinateur est exécuté sur un ordinateur.

**20.** Support d'enregistrement numérique comprenant un produit de programme d'ordinateur selon la revendication 19.

a) Inter-LA-Handover der MS2 von LA3 nach LA4
mit entsprechender Signalisierung an das VLR

b) Eingehender Anruf an MS1 bewirkt Pagings in LA1

Figur 1

a) 25 Handovers zwischen Zellen c1 und c2 → HO(c1, c2) = HO(c2, c1) = 25 in der HO-Matrix
b) Beispiel eines HO von 100 zwischen Zellen verschiedener LAs (Inter-LA-Handover)
c) Zerlegung der HO-Gesamtsumme einer Zelle in HO_ext (rot), HO_int (grün) und HO_com (orange)

# Figur 2

HO_ext(c1) = 100

HO_ext(c2) = 100

LA2

a)

c)

b)

c1 ⟷ c2

LA1

HO_com(c1) = 80
HO_com(c2) = 80

HO_int(c1) = 50

HO_int(c2) = 50

a) Ein Wechsel von c1 nach LA2 führt zu einer Erhöhung des Inter-LA-HO von 30, wenn c2 in LA1 verbleibt.

b) Ein Wechsel von c2 nach LA2 führt zu einer Erhöhung des Inter-LA-HO von 30, wenn c1 in LA1 verbleibt.

c) Erst, wenn c1 und c2 gleichzeitig zu LA2 wechseln, reduziert sich das Inter-LA-HO um 100!

# Figur 3

Konstruktion des Graphen für die Randzellenmenge R1 (nur die durchgezogenen Kanten);
gestrichelte Kanten: HO-Relationen, die für die Konstruktion nicht berücksichtigt werden;
K1, K2, K3 sind die Zusammenhangskomponenten des Graphen,
gleichzeitig die Gruppierung von R1.

# Figur 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1139682 A

- EP 1238555 B1

**In der Beschreibung aufgeführte Nicht-Patentliteratur**

- **Simon, V. ; Imre, S.** Location Area Design Algorithms for Minimizing signalling costs in Mobile Networks. *International Journal of Business Data Communications and Networking,* April 2007, vol. 3 (2

- **Demestichas P. et al.** Computationally efficient algorithms for location area planning infuture cellular systems. *Computer Communications,* 2000, 23